(19) Europäisches Patentamt / European Patent Office / Office européen des brevets

(11) **EP 2 935 807 B1**

(12) **FASCICULE DE BREVET EUROPEEN**

(45) Date de publication et mention
de la délivrance du brevet:
**10.05.2017 Bulletin 2017/19**

(21) Numéro de dépôt: **13826989.9**

(22) Date de dépôt: **17.12.2013**

(51) Int Cl.:
*F01D 15/10* [(2006.01)]   *F03G 6/06* [(2006.01)]
*F01K 1/12* [(2006.01)]   *F02G 5/02* [(2006.01)]
*F01K 27/00* [(2006.01)]   *F01K 3/00* [(2006.01)]

(86) Numéro de dépôt international:
**PCT/BE2013/000066**

(87) Numéro de publication internationale:
**WO 2014/094079 (26.06.2014 Gazette 2014/26)**

(54) **CENTRALE ÉLECTRIQUE THERMIQUE CLASSIQUE OU SOLAIRE THERMODYNAMIQUE À CONCENTRATION**

KONZENTRIERENDES THERMODYNAMISCHES SOLAR- ODER KONVENTIONELLES WÄRMEKRAFTWERK

CONCENTRATING THERMODYNAMIC SOLAR OR CONVENTIONAL THERMAL POWER PLANT

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **21.12.2012 BE 201200874**

(43) Date de publication de la demande:
**28.10.2015 Bulletin 2015/44**

(73) Titulaire: **Rutten New Energy System SA**
**4671 Blégny (BE)**

(72) Inventeur: **RUTTEN, Jean**
**B-4670 Mortier (Blégny) (BE)**

(74) Mandataire: **Powis de Tenbossche, Roland et al**
**Cabinet Bede S.A.**
**Boulevard Général Wahis 15**
**1030 Bruxelles (BE)**

(56) Documents cités:
**EP-A1- 0 040 748   AT-A4- 506 796**
**US-A- 4 063 417**

**Description**

La présente invention a pour objet une centrale électrique comprenant :

(a) une unité de pressurisation d'un liquide,
(b) une turbine Pelton comportant un arbre de rotation,
(c) une conduite reliant l'unité de pressurisation à la turbine Pelton pour amener du liquide pressurisé à la turbine Pelton, ledit conduit étant muni d'au moins un injecteur, et
(d) un générateur, avantageusement un alternateur, apte à être entraîné directement par l'arbre de rotation de la turbine, avantageusement avec interposition d'un système d'engrenage(s).

On connaît de nombreuses centrales électriques utilisant de la vapeur surchauffée à haute pression et à haute température, vapeur qui est détendue dans une ou des turbines à vapeur pour la ou les mettre en rotation et pour qu'elle(s) entraîne(nt) un générateur, avantageusement un alternateur, pour produire une énergie électrique.

Pour la production de vapeur surchauffée, on peut utiliser des combustibles fossiles ou d'autres sources de chaleur. Par exemple, on connaît les centrales solaires à concentration utilisant une série de miroirs paraboliques, cylindroparaboliques ou de Fresnel, pour concentrer l'énergie solaire sur un corps de chauffe pour produire de la vapeur d'eau surchauffée.

Les centrales solaires connues sont basées sur le cycle de Rankine, dans lequel la vapeur surchauffée (par exemple à 550°C, pour une pression de $140\ 10^5$Pa) est détendue dans des turbines à vapeur. Le rendement global de telles centrales est limité à moins de 18%, c'est-à-dire que pour une puissance au sol du soleil de $1000$W/m$^2$, on est apte à en récupérer au maximum $180$W/m$^2$.

On connaît également les éoliennes pour produire de l'électricité. De manière connue, les pales de l'éolienne sont montées sur un arbre qui est apte à entraîner en rotation l'arbre d'un alternateur.

Une variante d'un procédé utilisant des éoliennes a été proposée dans le document US4710100. Selon cette variante (voir en particulier la figure 7 de ce document), une série d'éoliennes sont adaptées pour entraîner une série de pompes pour mettre sous pression de l'eau, cette eau pressurisée étant ensuite amenée à une turbine Pelton entraînant un générateur. Le rendement d'une telle installation est limité par le rendement des éoliennes, mais surtout des nombreuses pompes nécessaires pour la mise sous pression de l'eau. Ce procédé n'utilise pas le cycle de Rankine avec de la vapeur surchauffée.

On connaît également par le document AT 506796 un moteur thermique utilisant une turbine Pelton actionnée par un fluide provenant d'un réservoir mis sous pression par évaporation d'isobutane, composé extrêmement explosif. Le procédé selon ce document n'est pas utilisable et sera rejeté par l'homme du métier. En effet, La Pelton tourne dans une atmosphère contenant de l'isobutane, alors que le fonctionnement de la Pelton générera des points chauds, voire des étincelles. Le gaz explosif, l'isobutane, doit se détendre de manière isenthalpique à basse température. Dans le procédé AT 506796, toute la masse d'eau doit être chauffée, par exemple à 50-60°C pour assurer l'évaporation de l'isobutane liquide. Le chauffage de cette quantité d'eau nécessite une grande quantité d'énergie et sera une source d'énorme perte d'énergie. La machine selon AT 506796 travaille à basse température (inférieure à 100°C). Si on prend une température de chauffage de l'eau à mettre sous pression par l'isobutane de 70°C et une température de 40°C au niveau du condenseur, le rendement théorique de la machine serait de moins de 9%, ce qui reviendra à dire à l'homme du métier que le rendement effectif de ce procédé sera nul, voire négatif, si on prend en considération les différentes pertes thermiques, de frottement, etc.). Enfin, vu les températures de fonctionnement du procédé selon AT 506796, la pression maximale de fonctionnement sera de 7bars. En prenant pour hypothèse une pression de travail moyenne de 4bars, une machine de 2000kW va requérir un débit d'eau d'environ 6m$^3$/s, soit un réservoir devant avoir une contenance de plus de 10000m$^3$ pour assurer l'apport en eau pendant 30minutes. Un tel procédé est donc considéré comme irréaliste pour l'homme du métier.

Par le document US4063417 on connaît une installation utilisant l'eau chaude géothermique. L'eau chaude liquide présentant une température moyenne inférieure à 170°C est amenée à une Pelton pour l'entraîner, tandis que la vapeur libérée est envoyée à une turbine vapeur. Pour l'homme du métier, il n'existe aucun intérêt énergétique, ni économique d'associer une ou des Pelton à une turbine vapeur, puisqu'il est économiquement et énergétiquement plus rentable d'utiliser une turbine vapeur bien dimensionnée.

Par le document EP0040748 on connaît une chaudière pour un fluide présentant un haut degré d'expansion. Cette chaudière comporte une partie en contact avec des fumées de combustion et une partie destinée à chauffer un fluide secondaire. Pour assurer un bon échange thermique le fluide primaire doit rester liquide. Si le fluide est de l'eau, la variation volumique de l'eau liquide ne sera que d'environ 2% pour une variation de température d'environ 50°C. Cette expansion de l'eau liquide va alors générer une surpression dans la cloche supérieure comprenant la roue. Le niveau d'eau au niveau de la roue sera ainsi abaissé. Un tel dispositif ne produira ainsi pas d'énergie, mais constituera bien un frein à la circulation de l'eau chaude vers l'échangeur secondaire.

On connaît enfin par le document WO97/16629 un système entraînant un rotor au moyen d'eau provenant de deux réservoirs mis sous pression par un gaz et associés à un échangeur de chaleur. Ainsi que spécifié, le travail maximum récupérable déterminé par le cycle théorique (sans aucune perte) de Carnot est de 22,8%. Avec toutes les déperditions d'énergie qu'il y aura avec le système WO97/16629, le rendement réel du système sera loin en deçà des 22,8%, à savoir un rendement réel proche de zéro, voire même négatif.

L'invention a pour objet un dispositif permettant des rendements réels importants, par exemple de 35% et plus et des rendements maximums déterminés par le cycle de Carnot importants, par exemple de plus de 50, voire 60%.

Pour arriver à de tels rendements, le dispositif suivant l'invention est une centrale électrique thermique ou solaire thermodynamique basée sur un cycle thermodynamique, avantageusement un cycle au moins sensiblement équivalent à un cycle de vapeur de Rankine pour générer un liquide sous pression, associant (a) au moins une turbine Pelton pour la transformation de l'énergie du liquide sous pression en une énergie mécanique, et au moins un générateur ou alternateur pour transformer l'énergie mécanique en une énergie électrique, ladite centrale comprenant:

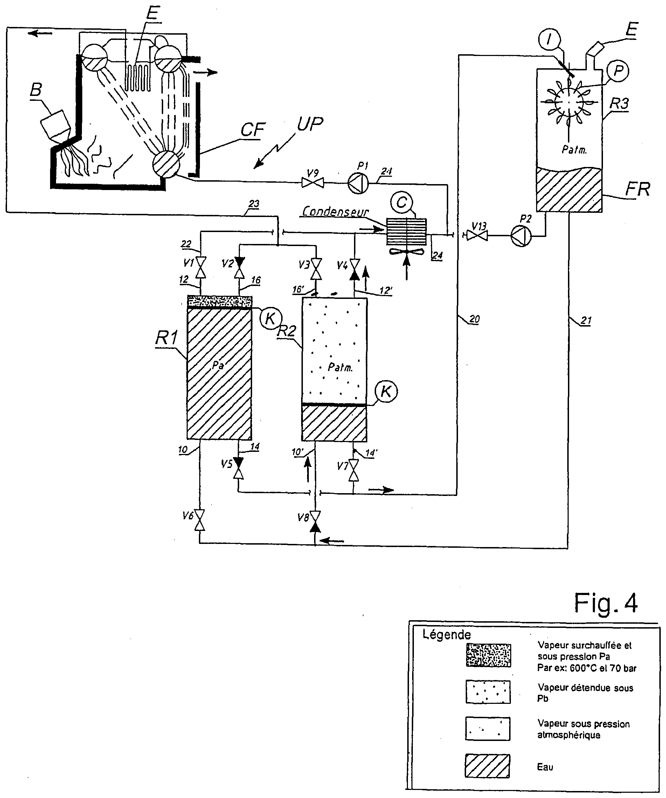

> (a) une unité de pressurisation d'un liquide (UP) (Fig. 4),
> (b) une turbine Pelton (P) comportant un arbre de rotation,
> (c) une conduite (20) reliant l'unité de pressurisation à la turbine Pelton (P) pour amener du liquide pressurisé à la turbine Pelton, ladite conduite (20) étant munie d'au moins un injecteur, et
> (d) un générateur, avantageusement un alternateur, adapté pour être entraîné par l'arbre de rotation de la turbine (P), avantageusement avec interposition d'un système d'engrenage(s),

dans laquelle l'unité de pressurisation (UP) d'un liquide comprend au moins :

- un réservoir (R1, R2) apte à résister à des pressions intérieures de plus de $5 \cdot 10^5$ Pa et destiné à contenir le liquide à pressuriser, ledit réservoir (R1, R2) étant associé au moins à un premier conduit de sortie (14, 14') avec une valve (V5, V7) pour du liquide pressurisé dans la conduite (20) et à un premier conduit d'entrée (10, 10') avec valve (V6, V8) pour amener du liquide dans le réservoir (R1, R2), et
- un moyen de chauffage.

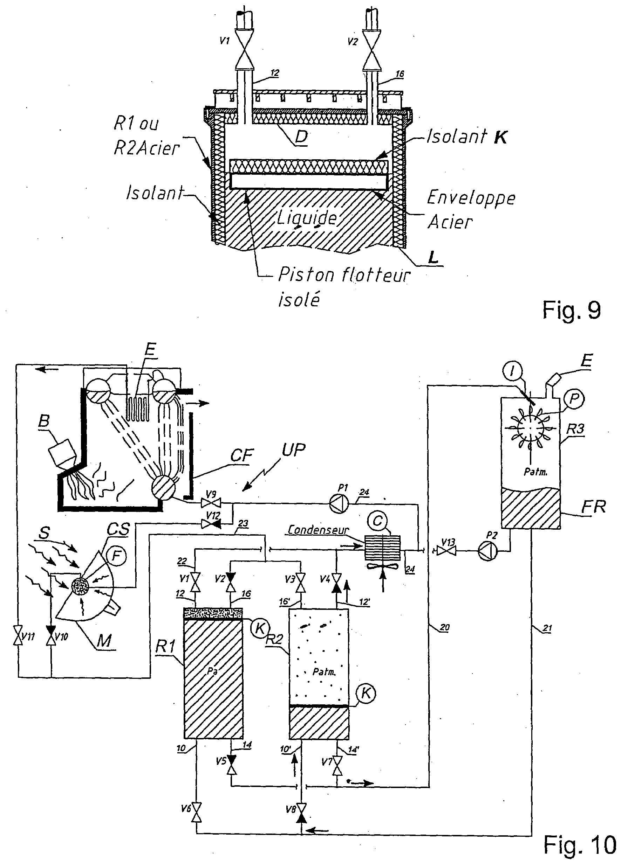

Ladite centrale étant essentiellement caractérisée en ce que le moyen de chauffage est un corps de chauffe a combustion de matières fossiles, de biomasse de bois ou autre noté CF, ou un corps de chauffe du type solaire à concentration, du type solaire thermodynamique noté CS (fig. 4 et 10) pour produire de la vapeur surchauffée, en ce que le réservoir (R1,R2) est en outre associé à un deuxième conduit d'entrée (16, 16') pour amener une vapeur surchauffée dans le réservoir (R1, R2), via une conduite d'amenée (23) reliant le système de production de vapeur surchauffée au deuxième conduit d'entrée (16, 16') du réservoir, et

en ce que le réservoir ou des réservoirs (R1, R2) comporte(nt) un élément piston flotteur isolé (K, fig. 9), apte à flotter à la surface du liquide présent dans le réservoir considéré (R1, R2). Ceci est intéressant pour éviter une condensation de la vapeur surchauffée au contact du liquide.

Avantageusement, l'élément isolant (K) recouvre plus de 90% avantageusement plus de 99 % de la surface du liquide dans le réservoir (R1,R2). L'élément isolant couvre de préférence sensiblement toute la surface libre du liquide dans le réservoir, jouant ainsi le rôle d'une sorte de piston isolant. L'élément isolant est par exemple réalisé en une mousse rigide de faible densité et à cellules fermées. L'élément isolant peut également comprendre une série d'éléments isolants distincts aptes à flotter sur la surface du liquide. Cette série d'éléments flottants peut alors former soit un lit isolant, voire un joint isolant autour d'un élément isolant central.

De préférence, le ou les réservoirs ont une forme allongée et sont associés à un flotteur de forme allongée apte à flotter à la surface du liquide présente dans le réservoir, ledit flotteur étant adapté pour définir dans un réservoir considéré une partie supérieure adaptée pour recevoir sensiblement uniquement de la vapeur surchauffée, et éventuellement du liquide de condensation provenant de la vapeur surchauffée, et une partie inférieure adaptée pour recevoir sensiblement du liquide provenant de la turbine Pelton, la partie supérieure étant munie d'au moins une isolation.

La présente invention a donc pour objet une centrale électrique, de conception simple, qui puisse assurer de haut rendement de conversion en énergie électrique, en particulier une centrale électrique dont les calories proviennent de la combustion des déchets de bois, d'huile végétale ou autres, ou également une centrale électrique solaire thermodynamique.

Pour mieux expliciter l'objet de l'invention, quelques informations seront reprises ci-après concernant la turbine Pelton utilisée pour les hautes chutes d'eau depuis plus de 100 ans dans le monde. La turbine hydraulique Pelton est idéale pour équiper les hautes chutes d'eau allant de 30 m à plus de 1.000 m. La turbine Pelton a de nombreux avantages pour transformer l'énergie de telles chutes; elle a notamment des rendements très élevés, supérieurs à 90 %.

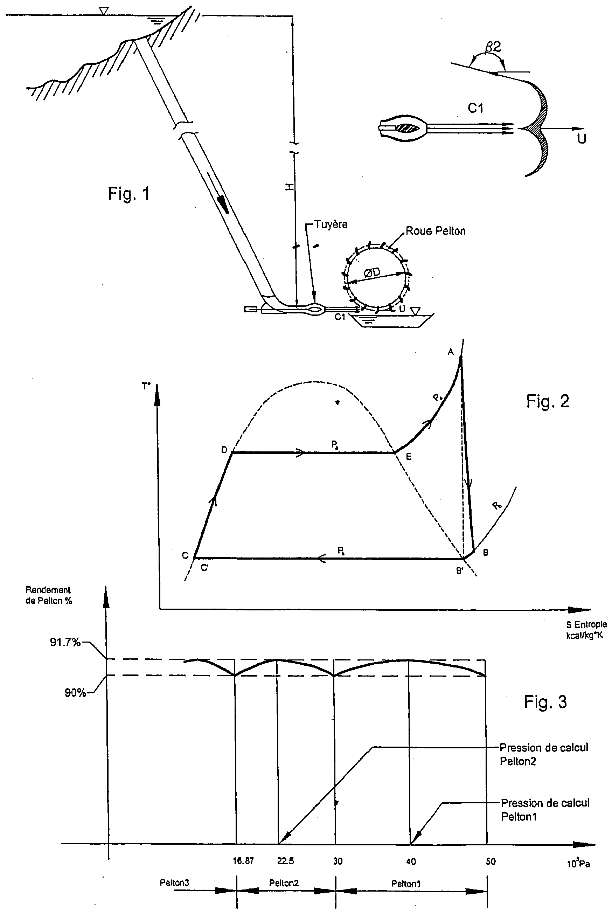

Pour mieux comprendre la présente invention, il est utile de rappeler les paramètres principaux d'une turbine Pelton utilisée avec une chute. Supposons donc une réserve d'eau à une hauteur H (voir figure 1) par rapport à la tuyère de la Pelton.

La tuyère transforme l'énergie de pression dans le conduit en énergie de vitesse. Au sortir de la tuyère (fig. 1), la vitesse $C_1$ vaut :

$$C1 = \varphi_1 \sqrt{2\,g\,H} \ (m/s.)$$

$\varphi_1$ : coefficient de rendement de la tuyère, généralement $\varphi_1 = 0,975$
g : 9,81 m/s.
H : dénivelé en mètre

A titre d'exemple, H = 400 m donne une vitesse $C_1$ :

$$C_1 = 0,975 \sqrt{2 \ 9,81 \ 400} = 86,37 \ m/s.$$

Le rendement $\eta_{Pelton}$ de turbines Pelton peut atteindre 0,9170.

Pour comprendre l'invention, il faut rappeler très brièvement le fonctionnement d'une centrale électrique classique. La plupart des centrales électriques de 1 à 1.000 MW et plus, solaires, nucléaires, à charbon, à la biomasse de bois,... utilisent le cycle de vapeur de Rankine (fig. 2). La vapeur surchauffée et sous haute pression (point A fig. 2) est classiquement détendue dans une turbine à vapeur. Cette détente polytropique est représentée par la courbe AB dans le diagramme de Rankine (fig. 2). Le rendement de cette détente varie de 0,7 pour les petites installations de 1 à 2 MW et peut atteindre 0,85 pour les grandes installations de plus de 50 MW.

Dans ce cas, la détente se fait dans une turbine multi étages, fréquemment plus de 15 étages et avec de nombreuses étapes de resurchauffes intermédiaires.

La présente invention utilise également avantageusement un cycle de Rankine pour réaliser la vapeur surchauffée sous pression. Ladite vapeur est mise en communication avec un cylindre rempli d'eau. L'eau contenue dans le cylindre R1, mise sous pression par ladite vapeur, est alors utilisée pour alimenter la tuyère de la Pelton P (fig. 4).

Par la coopération de deux cylindres R1, R2 et d'un réservoir R3, on peut aisément alimenter la Pelton P en contenu sans désemparer (fig. 4).

La quantité de vapeur admise dans le cylindre R1 sera réglée par la soupape ou valve V2 (fig. 4). La vapeur surchauffée à la pression Pa est ensuite détendue de la pression Pa à la pression Pb (fig. 2).

Le cylindre R1 sera thermiquement isolé pour que la détente A B soit la plus isentropique possible. A titre d'exemple, si la pression de vapeur surchauffée passe de 50 $10^5$ Pa à 30 $10^5$ Pa, on dimensionnera avantageusement la turbine Pelton à une pression de 40 $10^5$ Pa pour son point nominal.

Dans ces conditions, le rendement de la Pelton passe successivement de 90 % à 91,7 % puis à 90 %.

Sur cette plage de 50 $10^5$ Pa à 30 $10^5$ Pa, le rendement moyen de la turbine Pelton est de 90,85 %.

Si les déperditions calorifiques du cylindre R1 (fig. 4) sont faibles, le rendement moyen de la détente dépasse sensiblement le rendement de la détente d'une « turbine à vapeur » classique.

Si on veut poursuivre la détente de la vapeur et si on désire maintenir un rendement élevé de la machine, une deuxième Pelton est nécessaire.

La deuxième Pelton permettra une détente de la vapeur de 30 $10^5$ Pa à 16,87 $10^5$ Pa. La deuxième Pelton sera avantageusement calculée à 22,5 $10^5$ Pa et ainsi de suite avec une troisième Pelton, etc ... jusqu'à obtenir une pression résiduelle acceptable pour le rendement global de l'installation. On peut ainsi maintenir un rendement moyen très élevé durant toute la détente de la vapeur. A titre d'exemple, uniquement la figure 3 montre le diagramme de l'évolution du rendement utilisant deux turbines Pelton avec une variation de pression de 50 $10^5$ Pa à 16,87 $10^5$ Pa.

L'invention a donc pour objet une centrale électrique thermique ou solaire thermodynamique basée sur un cycle thermodynamique, avantageusement un cycle au moins sensiblement équivalent à un cycle de vapeur de Rankine pour générer un liquide sous pression, associant (a) au moins une turbine Pelton pour la transformation de l'énergie du liquide sous pression en une énergie mécanique, et au moins un générateur ou alternateur pour transformer l'énergie mécanique en une énergie électrique.

L'invention concerne une centrale électrique comprenant :

(a) une unité de pressurisation d'un liquide,
(b) une turbine Pelton comportant un arbre de rotation,
(c) une conduite reliant l'unité de pressurisation à la turbine Pelton pour amener du liquide pressurisé à la turbine Pelton, ladite conduite étant munie d'au moins un injecteur (par injecteur, on entend dans le présent mémoire un système canalisant le liquide sortant de la conduite pour lui donner une vitesse de sortie importante. Un tel injecteur est par exemple une tuyère), et
(d) un générateur, avantageusement un alternateur, apte à être entraîné par l'arbre de rotation de la turbine, avantageusement avec interposition d'un système d'engrenage(s), par exemple lorsque la vitesse de rotation de l'arbre de la Pelton est différente de la vitesse de synchronisme de l'alternateur.

Des particularités et détails de la centrale électrique selon l'invention sont donnés ci-après :

- un réservoir R1, R2 apte à résister à des pressions intérieures de plus de 5 $10^5$ Pa (en particulier plus de 20 $10^5$ Pa, voir largement plus, par exemple 40 $10^5$ Pa, 50 $10^5$ Pa, 75 $10^5$ Pa, 100 $10^5$ Pa. 140 $10^5$ Pa, ou encore plus, ceci en fonction de la pression de la vapeur surchauffée, et destiné à contenir le liquide à pressuriser, ledit réservoir étant associé au moins à un premier conduit de sortie avec une valve pour du liquide pressurisé dans la conduite, à un premier conduit d'entrée avec valve pour amener du liquide dans le réservoir, et un deuxième conduit d'entrée pour amener une vapeur surchauffée dans le réservoir, et/ou

- la partie supérieure et la partie inférieure d'un réservoir sont attachées l'une à l'autre avec interposition d'une couche isolante, en particulier d'une membrane isolante dont le bord libre tourné vers l'intérieur du réservoir est avantageusement adapté pour toucher la paroi extérieure du flotteur. et/ou

- le ou les réservoirs (R1, R2) sont isolés thermiquement, avantageusement le long de sa ou leurs surfaces intérieures pour assurer une détente polytropique ou sensiblement isentropique de la vapeur surchauffée. et/ou

- le réservoir (R1, R2) est en outre associé à un deuxième conduit de sortie (12, 12') pour évacuer de la vapeur présente dans le réservoir (R1, R2), ledit deuxième conduit de sortie (12, 12') étant associé à une valve (V1, V4). Une telle évacuation est utile pour dépressuriser le réservoir, lors de son remplissage pour un nouveau cycle. et/ou

- la centrale comporte (a) au moins un jeu de 4 réservoirs avantageusement sensiblement identiques (R1, R2 et R'$_1$ et R'$_2$) adaptés pour recevoir de la vapeur sous pression de plus de 5 10$^5$ Pa provenant du cycle thermodynamique ou du corps de chauffe (CF) et adaptés pour contenir du liquide sous pression destiné à la turbine Pelton, et (b) un système de contrôle des réservoirs pour amener du liquide sous pression à la turbine Pelton pour que le générateur ou alternateur entraîné par ladite turbine Pelton génère une énergie électrique sensiblement stable sur au moins 1 heure. et/ou

- le deuxième conduit de sortie (12,12') pour évacuer de la vapeur est relié à une canalisation (22) amenant la vapeur dans un condenseur (C) pour convertir la vapeur détendue en un liquide, ledit condenseur (C) étant relié par une canalisation (24) comportant un moyen de pompage (P1) pour amener du liquide provenant de la condensation de la pression du condenseur à la pression maximum dans le système (CS, CF) pour produire de la vapeur surchauffée. Ledit condenseur est avantageusement relié par une canalisation comportant un moyen de pompage pour amener du liquide provenant de la condensation de la vapeur à la haute pression du cycle de Rankine dans le système pour produire de la vapeur surchauffée. On peut avantageusement récupérer l'énergie de la condensation pour l'utiliser à des fins de séchage, cuisson, etc. Il s'agit ici de cogénération. Ceci permet d'améliorer le rendement du système et de récupérer une partie de l'énergie de la vapeur. et/ou

- la centrale comporte au moins un premier réservoir (R1) et un deuxième réservoir (R2) montés en parallèle, chacun desdits premier et deuxième réservoirs (R1, R2) étant apte à résister à des pressions intérieures de plus de 5 10$^5$ Pa (ou à une pression au moins supérieure la pression maximale de la vapeur surchauffée qui est amenée dans les réservoirs) et destiné à contenir le liquide à pressuriser, chaque réservoir (R1, R2) étant associé au moins à un premier conduit de sortie (14, 14') avec une valve (V5, V7) pour du liquide pressurisé dans le réservoir, à un deuxième conduit de sortie (12, 12') pour évacuer de la vapeur présente dans le réservoir considéré, ledit deuxième conduit de sortie (12, 12') étant associé à une valve (V1, V4), à un premier conduit d'entrée (10, 10') avec valve (V6, V8) pour amener du liquide dans le réservoir considéré (R1, R2), et à un deuxième conduit d'entrée (16, 16') pour amener une vapeur surchauffée dans le réservoir considéré (R1, R2). et/ou

- la turbine Pelton est associée à un collecteur de liquide, ledit collecteur étant relié par une canalisation et un moyen de pompage à un réservoir via son premier conduit d'entrée, de sorte qu'un premier circuit pour le liquide est formé par la turbine Pelton et le ou des réservoirs. Ceci permet de réduire, voire d'annuler la consommation en liquide, par exemple en eau. et/ou

- la centrale comprend au moins un collecteur (FR) adapté pour récupérer du liquide après son action sur la turbine Pelton (P), ledit collecteur de liquide (FR de R3) étant sensiblement surélevé par rapport à un ou plusieurs réservoirs (R1, R2) de manière à permettre un remplissage du ou de réservoirs considérés (R1, R2) par la force de gravité via une canalisation (21) s'étendant entre ledit collecteur (FR) et ledit premier conduit d'entrée (10,10') du ou des réservoirs considérés, de sorte qu'un premier circuit fermé pour le liquide est formé entre la turbine Pelton (P) et le ou des réservoirs (R1, R2). et/ou

- le système pour produire de la vapeur surchauffée (CS, CF) et le ou les réservoirs (R1, R2) forment un deuxième circuit fermé avec le condenseur (C) et le système de pompage (P1). Ceci permet donc également de réduire, voire d'annuler la consommation en liquide utilisé pour la vapeur surchauffée. et/ou

- la centrale comporte une série de réservoirs jumelés (R1, R2) adaptés pour alimenter une série de turbines Pelton (P), dont chacune d'elles est adaptée au rendement proche de l'optimum, dont les arbres entraînent avantageusement via un train d'engrenages un même générateur, avantageusement un même alternateur. et/ou

- le réservoir est au moins partiellement muni d'une isolation thermique, de préférence au moins sur sa surface intérieure. et/ou

- le ou les réservoirs sont adaptés pour assurer une détente polytropique ou sensiblement isentropique. et/ou

- le système pour produire de la vapeur surchauffée comporte un corps de chauffe qui peut être classique CF (gaz, fuel, bois charbon) ou autre, et un conduit d'évacuation des fumées de combustion, ladite chambre de combustion et/ou ledit conduit d'évacuation des fumées étant agencés pour transférer des calories au corps de chauffe. Le corps de chauffe peut également être alimenté par l'énergie solaire à concentration. Le corps de chauffe est alors noté CS. et/ou

- la centrale comporte une série de réservoirs adaptés pour alimenter une série de turbines Pelton, dont les arbres entraînent avantageusement via un train d'engrenages un même générateur, avantageusement un même alternateur.
- le liquide est un milieu aqueux, avantageusement contenant plus de 90% en poids d'eau, tandis que la vapeur surchauffée est une vapeur constituée à plus de 90% en volume de vapeur d'eau surchauffée. Le circuit de la vapeur surchauffée est totalement indépendant du circuit d'eau utilisée pour la turbine Pelton. Dans l'un et l'autre cas, la consommation d'eau est strictement nulle dans ces deux différents circuits. et/ou
- la centrale comporte un condenseur de vapeur sortant d'un ou de réservoirs, ledit condenseur comprenant un élément d'échange thermique dans lequel circule un fluide pour assurer la condensation de la vapeur en un liquide basse pression, celle du condenseur. La pression à l'intérieur du condenseur est avantageusement la pression atmosphérique. Le liquide condensé est ensuite porté à la pression maximale du cycle via une pompe adéquate. Ensuite, ce liquide à haute pression est chauffé, vaporisé et surchauffé pour produire à nouveau un travail dans le cycle suivant. et/ou
- la centrale comporte un condenseur (C) de vapeur sortant d'un ou de réservoirs (R1, R2), ledit condenseur (C) comprenant un élément d'échange thermique dans lequel circule un fluide pour assurer la condensation de la vapeur en un liquide, tandis que l'élément d'échange thermique du condenseur (C) est relié à un échangeur permettant d'utiliser la chaleur de condensation en vue d'une utilisation en cogénération. et/ou
- la centrale est adaptée pour fonctionner avec des pressions de vapeur surchauffée de plus de $10\ 10^5$ Pa, avantageusement de plus de $25\ 10^5$ Pa, de préférence de plus de $50\ 10^5$ Pa ou plus, pour des températures de vapeur comprises entre 110°C et 600°C, voire plus, en particulier supérieures à 150°C.

L'invention a encore pour objet l'utilisation d'une centrale électrique suivant l'invention, pour produire de l'énergie électrique à partir de vapeur surchauffée, dans lequel la vapeur surchauffée met sous pression un liquide dans un réservoir, et dans lequel le liquide pressurisé est amené à la turbine Pelton pour l'entraîner en rotation, de manière à entraîner en rotation l'arbre d'un générateur, avantageusement un alternateur, pour générer de l'énergie électrique.

La production de vapeur surchauffée est également avantageusement réalisée par un système solaire, en particulier une centrale solaire à concentration.

Le procédé selon l'invention est donc un procédé dans lequel

- on produit une vapeur surchauffée, avantageusement une vapeur d'eau surchauffée,
- on amène cette vapeur surchauffée dans un réservoir contenant un liquide pour le mettre sous pression, et
- on conduit le liquide sous pression à au moins une turbine Pelton pour entraîner au moins un générateur ou alternateur pour produire de l'énergie électrique.

Dans le procédé de production d'énergie électrique selon l'invention, on utilise avantageusement au moins un jeu de réservoirs sensiblement identiques (R1, R2 et R'1 et R'2) pour la mise sous pression d'un liquide au moyen de vapeur surchauffée, et on combine le cycle de remplissage et de vidange d'une paire de réservoirs R1, R2 et celui d'une autre paire de réservoirs R'1 et R'2 en quinconce, de manière à contrôler la fourniture de vapeur, sous pression en provenance de la chaudière en continu sans désemparer.

Des particularités et avantages de formes de réalisation préférées (données à titre d'exemple uniquement) ressortiront de la description détaillée suivante, dans laquelle il est fait référence aux dessins ci-annexés.

Dans ces dessins,

- la figure 1 est une vue schématique d'une turbine Pelton recevant de l'eau provenant d'un barrage;
- la figure 2 est un schéma du cycle de Rankine;
- la figure 3 est une vue du rendement de 2 Pelton successives, en fonction de la pression de la vapeur d'eau surchauffée;
- la figure 4 est une vue schématique d'une centrale électrique selon l'invention;
- les figures 5 à 8 montrent des étapes du fonctionnement de la centrale électrique du type de la figure 4, mais comportant un corps de chauffe qui est classique ou solaire pour la production de vapeur d'eau surchauffée;
- la figure 9 est une vue partielle en coupe d'un réservoir comprenant un élément flottant isolant (représenté en coupe);
- la figure 10 est une vue schématique d'une centrale électrique du type de la figure 4, mais comportant un corps de chauffe au bois pour la production de la vapeur d'eau surchauffée, associé à un corps de chauffe solaire.

La centrale électrique de la figure 4 comprend :

- une turbine Pelton P dont l'arbre est adapté pour entraîner en rotation un alternateur (non montré) via un dispositif d'engrenages (non représenté, mais connu en tant que tel), cette turbine est alimentée en eau sous pression par un ou des injecteurs I;
- un réservoir R3 formant une chambre dans laquelle est placée la turbine Pelton P, ledit réservoir R3 comportant un évent E pour que la pression dans le réservoir R3 soit égale à la pression atmosphérique, le fond FR du réservoir formant un collecteur de l'eau après son impact sur les aubes de la turbine Pelton P, le fond FR du réservoir R3 sera avantageusement au-dessus des réservoirs R1 et R2 en vue d'utiliser uniquement la gravité pour remplir les réservoirs R1 et R2;
- un corps de chauffe CF permettant de transformer l'eau liquide en vapeur d'eau surchauffée sous haute pression;
- une centrale thermique CF comprenant un brûleur B pour un combustible (par exemple, gaz naturel, charbon, fuel, bois, pellets de bois, etc.), une chambre pour canaliser les gaz de combustion, une sortie des gaz de combustion, un circuit comportant des ballons et un échangeur situés dans la chambre pour transférer des calories de la combustion à l'eau et pour la transformer en vapeur surchauffée.
- une série de réservoirs R1, R2 destinés à recevoir l'eau à pressuriser et de la vapeur d'eau surchauffée, chaque réservoir R1, R2 étant associé à un premier conduit d'entrée 10,10' avec une valve V6, V8 pour amener du liquide dans le réservoir (avantageusement au voisinage du fond dudit réservoir), un deuxième conduit d'entrée 16,16' avec une valve V2, V3 pour amener de la vapeur surchauffée dans le réservoir (avantageusement au voisinage de sa partie supérieure) de manière à mettre sous pression l'eau présente dans le réservoir, un premier conduit de sortie 14, 14' avec une valve V5, V7 pour l'eau mise sous pression dans le réservoir, ce conduit de sortie 14,14' étant adjacent du fond du réservoir, et un deuxième conduit de sortie 12,12' avec valve V1, V4 pour l'évacuation de vapeur encore présente dans le réservoir et pour l'amener au condenseur C. Les réservoirs R1, R2 seront avantageusement munis d'un isolant thermique pour éviter au maximum une perte de chaleur de la vapeur surchauffée de par une déperdition de chaleur par les parois. Cet isolant thermique est par exemple constitué d'un revêtement isolant thermique situé obligatoirement sur les faces intérieures du réservoir.
- un condenseur C adapté pour condenser la vapeur provenant d'un réservoir R1, R2, de manière à former une phase liquide chaude qui sera ensuite envoyée vers le corps de chauffe CF;
- une conduite 20 pour amener l'eau sous pression sortant d'un réservoir par la valve V5 ou V7 vers le ou les injecteurs I de la turbine Pelton P;
- une conduite 21 reliant le réservoir R3 (plus exactement le collecteur d'eau FR du réservoir R3) pour remplir à nouveau un réservoir R1, R2 par gravité, on peut évidemment ajouter une pompe de circulation dans le conduit 21;
- une conduite 22 reliant les vannes V1 et V4 au condenseur C pour amener la vapeur détendue d'un réservoir R1, R2 au condenseur C;
- une conduite 23 reliant les vannes V2 et V3 au corps de chauffe CF, ladite conduite étant destinée à amener de la vapeur surchauffée aux réservoirs R1, R2;
- une conduite 24 sur laquelle est montée une pompe P1 et la valve V9 pour amener le liquide sortant du condenseur C à la centrale thermique CF,

La centrale électrique comporte un circuit "froid" pour l'eau liquide entre les réservoirs R1, R2 et le réservoir R3, et un circuit "chaud" pour la vapeur surchauffée et l'eau du condenseur entre les réservoirs R1 et R2 et la centrale thermique.

La séparation entre les deux circuits a lieu à l'interface eau liquide - vapeur surchauffée dans les réservoirs R1, R2, cette interface étant avantageusement formée par un élément isolant K (fig. 9) flottant à la surface de l'eau d'un réservoir. Cet élément isolant K est par exemple réalisé en mousse rigide. Cet élément isolant lors de son déplacement dans son réservoir est apte à donner un signal pour commander la fermeture de la valve V5, V7 lorsque le niveau de liquide dans le réservoir est inférieur à un niveau déterminé, et/ou la fermeture de la valve V2, V3 lorsque le niveau de liquide dans le réservoir considéré atteint un niveau déterminé.

L'élément isolant K de la figure 9 a une forme supérieure plane. Ceci permet de rendre l'espace mort aussi petit que possible entre l'isolant K et la face D du fond supérieur du cylindre R1, R2 figure 9. Comme montré en outre à la figure 9, le réservoir R1 ou R2 est isolé avec une couche d'isolation thermique L, le long de sa face interne.

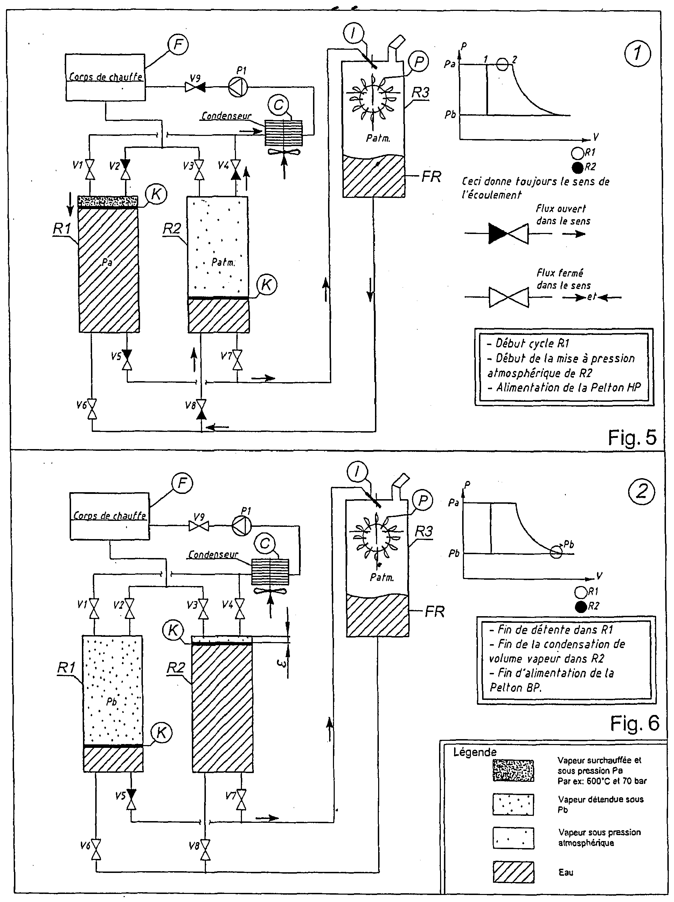

Le cycle thermodynamique de la centrale de la figure 4 est schématisé aux figures 5 à 8, mais pour une centrale électrique ayant pour source de vapeur surchauffée un corps de chauffe noté CF à la figure 5; ce corps de chauffe peut être classique (fuel, gaz, charbon, bois, huile) ou solaire. Il va de soi que le cycle thermodynamique est similaire si la vapeur surchauffée est produite par la centrale thermique solaire (voir figure 10) ou par un mixte de centrale solaire - centrale thermique.

Prenons la figure 5 et supposons le cycle établi. La vapeur surchauffée, à haute pression est produite dans le corps de chauffe ou foyer F. La vapeur surchauffée sous haute pression est introduite via la vanne V2 dans l'espace mort du réservoir R1, espace mort situé au-dessus de l'élément isolant K. La vanne V3 est en position fermée.

Dans la position de la figure 5, le réservoir R1 est destiné à fournir de l'eau sous pression à la turbine Pelton P, tandis que le réservoir R2 est en phase de recharge en eau liquide.

Pour le réservoir R1, la vanne V2 est ouverte pour permettre l'admission de vapeur surchauffée provenant de la chaudière CF, tandis que la vanne V5 est ouverte pour le passage d'eau sous pression vers la turbine Pelton P. Les vannes V1 et V6 sont fermées.

Pour le réservoir R2, la vanne V3 est fermée pour éviter le passage de vapeur surchauffée dans le réservoir R2. La vanne V7 est également fermée pour éviter un passage d'eau du réservoir R1 vers le réservoir R2. Pour éviter un passage d'eau d'un réservoir à l'autre (de R1 à R2 ou de R2 à R1), les valves V5 et V7 sont avantageusement associées à un système anti-retour. La valve V4 est ouverte pour permettre à la vapeur détendue encore présente dans le réservoir R2 d'être évacuée et d'être amenée vers le condenseur. La valve V8 est également en position ouverte pour permettre le remplissage à nouveau du réservoir R2 en eau liquide, eau qui provient du réservoir R3, via la gravité. Cette introduction d'eau dans le réservoir R2 permet au niveau d'eau de s'élever et donc de chasser la vapeur hors du réservoir R2. La pression dans le condenseur est par exemple à environ $10^5$ Pa, soit la pression atmosphérique. L'opération de remplissage d'eau du réservoir R2 par gravité est avantageusement opérée lorsque la pression de vapeur présente dans le réservoir R2 est réduite, par exemple proche de la pression atmosphérique. L'eau chaude provenant de la condensation de la vapeur dans le condenseur C est récupérée et renvoyée à nouveau dans la chaudière via la pompe P1 et la conduite 24 (figure 4).

L'eau du réservoir R1 est mise sous pression, par exemple à une pression de 70 $10^5$ Pa, est amenée à un ou des injecteurs I de la turbine Pelton P.

La turbine P entraînée en rotation entraîne un alternateur et produit ainsi de l'énergie électrique. Le réservoir R1 se vide en eau liquide. La pression dans le réservoir R1 (qui correspond sensiblement à la pression de l'eau juste en amont de la tuyère de l'injecteur de la Pelton) est représentée dans le graphe de la figure 5. Cette pression est d'abord maintenue sensiblement à la pression Pa de la vapeur surchauffée sortant de la chaudière (phase pendant laquelle la quantité de vapeur surchauffée provenant de la chaudière permet de maintenir la pression dans le réservoir R1, malgré l'évacuation d'eau liquide vers la turbine. Entre le point 1 et le point 2 (figure 5), la pression de la vapeur est maintenue constante. Ensuite, la valve V2 se ferme et la pression de la vapeur décroît en fonction du volume d'eau débité. La pression décroît vers une pression résiduaire Pb. La détente de la vapeur est quasi isentropique dans le réservoir R1. Cette pression résiduaire Pb est par exemple de 2 à 10 $10^5$ Pa.

La figure 6 montre le niveau d'eau dans les réservoirs R1 et R2, après vidange partiel de R1. Le niveau d'eau dans le réservoir R1 est proche du minimum, de sorte que l'amenée d'eau en provenance de R1 vers la turbine P va bientôt s'arrêter, tandis que le niveau d'eau dans le réservoir R2 est maximal.

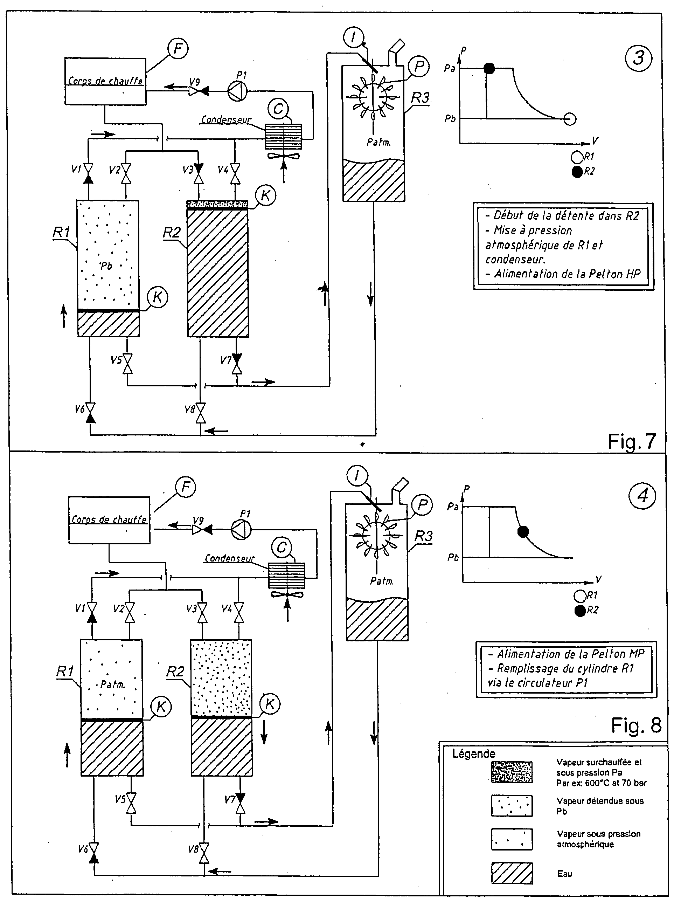

Lorsque le piston flotteur arrive au sommet, $\varepsilon \cong 0$ (figure 6), les vannes V7 et V4 sont en position fermée, tandis que la vanne V8 est mise en position fermée, cette fermeture étant suivie par l'ouverture de la vanne V3 (figure 7) pour introduire dans le réservoir R2 de la vapeur surchauffée et accroître la pression dans le réservoir R2. La pression de l'eau contenue dans le réservoir R2 s'accroît ainsi d'une pression proche de la pression atmosphérique, à une pression Pa correspondant sensiblement à la pression de la vapeur d'eau surchauffée.

Le graphe de la figure 6 montre la pression dans le réservoir R1, juste avant la fermeture de vanne V5. Lorsque la vanne V5 est fermée, la vanne V7 est ouverte pour que l'eau sous pression du réservoir R2 se déplace vers la turbine Pelton P, pour l'entraîner en rotation. Cette phase est représentée à la figure 7.

A cet instant, le réservoir R1 a les vannes V2, V5 en position fermée. Dans un premier temps la vanne V1 s'ouvre pour amener la vapeur sous pression résiduelle Pb à la pression du condenseur de la vapeur. Lorsque la pression de la vapeur dans R1 est suffisamment réduite, par exemple proche de la pression atmosphérique, la vanne V6 s'ouvre pour amener par gravité l'eau dans le réservoir R1 en provenance du réservoir R3 (collectant l'eau sortant de la turbine Pelton P). Le niveau d'eau dans le réservoir R1 monte, chassant encore la vapeur présente dans le réservoir via la vanne V1 vers le condenseur C.

Le niveau d'eau dans le réservoir R2 diminue, tandis que la pression dans le réservoir reste constante durant l'injection de vapeur surchauffée dans R2 (voir figure 7).

Le graphe de la figure 7 montre la pression dans le réservoir R2.

En contrôlant les périodes de vidange des réservoirs R1, R2 et de leur mise sous pression avec de la vapeur surchauffée, il est possible d'alimenter la turbine Pelton de manière continue avec de l'eau sous pression. De plus, en réglant le ou des injecteurs alimentant la turbine Pelton (par exemple en fonction de la pression régnant dans le réservoir utilisé pour l'alimentation en eau sous pression), la puissance fournie par la turbine Pelton peut être maintenue sensiblement constante.

De plus, on a remarqué précédemment que la pression de l'eau du réservoir utilisé pour alimenter la turbine Pelton P n'avait qu'une faible influence sur le rendement de la turbine P pour des pressions allant de 10 $10^5$ Pa à 100 $10^5$ Pa. Le rendement d'une turbine Pelton peut dépasser 93 % pour des finitions d'augets soignées. Avec un jeu de 3 turbines Pelton, une turbine Pelton HP haute pression, une turbine Pelton MP moyenne pression et une turbine Pelton BP basse pression, la perte de rendement des turbines Pelton peut ne pas excéder 2 % par rapport au rendement maximum. Le rendement de la Pelton varie comme le montre la figure 3. Ceci est particulièrement intéressant lors de l'utilisation de vapeur surchauffée provenant d'une centrale solaire, qui de par sa nature produit une énergie variable pendant le jour.

Pour assurer un rendement optimal, on utilise des turbines Pelton différentes en fonction de la pression. Par exemple, pour la détente de la vapeur d'une pression de $50\ 10^5$ Pa à $30\ 10^5$ Pa, on utilise une première turbine Pelton. Ensuite pour la détente de la vapeur d'une pression de $30\ 10^5$ Pa à $16,87\ 10^5$ Pa, on utilise une deuxième turbine Pelton différente de la première. Enfin, on utilise une troisième turbine Pelton pour la détente de la vapeur en dessous de $16,87\ 10^5$ Pa, cette troisième turbine Pelton étant différente de la première et de la deuxième.

Dans la forme de réalisation de la figure 4, la centrale électrique comprend uniquement une centrale thermique CF, en particulier une centrale thermique utilisant le bois ou des pellets de bois, ou tout autre combustible fossile, pour la production de vapeur d'eau surchauffée. Une telle centrale thermique permet d'assurer la production de vapeur surchauffée selon les besoins au cours de la journée.

Dans la forme de réalisation de la figure 4, par l'utilisation de deux réservoirs mis sous pression alternativement, par la vapeur surchauffée sous pression et remplis également alternativement, il est possible d'obtenir une production électrique de manière continue. Il est évident que l'on aurait pu utiliser plus de deux réservoirs, par exemple quatre ou plus, ceci pour augmenter la puissance de l'installation.

Si on observe le cycle avec les réservoirs tampons R1 et R2, on voit que la production de vapeur en provenance de la chaudière est intermittente. En combinant un jeu de réservoir $R'_1$ et $R'_2$ et en imbriquant les cycles de R1 et R2 avec les réservoirs identiques $R'_1$ et $R'_2$ on peut facilement avoir un débit de vapeur en continu sans désemparer.

La centrale électrique selon l'invention est particulièrement intéressante pour des puissances de plus de 250 kW, par exemple pour des puissances comprises entre 500kW et 50 MW, donc en particulier pour des centrales de moyenne puissance. Il est clair qu'en utilisant plusieurs turbines Pelton P en parallèle et un plus grand nombre de cylindres R1, R2, la centrale selon l'invention peut produire des puissances supérieures à 50 MW. Dans une centrale solaire à concentration, via des miroirs héliostats ou paraboliques de Fresnel, les calories utilisées dans le cycle de Rankine sont celles produites par le soleil. Le corps de chauffe noté CS peut opérer seul. La figure 10 montre le cas d'une centrale selon l'invention équipée d'un corps de chauffe classique, à combustion noté CF, jumelé avec un corps de chauffe solaire noté CS. Dans le cas de la figure 10, on peut produire de l'énergie jour et nuit sans désemparer.

Il serait aussi intéressant du point de vue écologique de combiner l'énergie solaire à concentration et l'énergie de combustion d'une biomasse de plaquettes de bois, de fanes séchées (tomates par ex.), etc ... La figure 10 représente une telle centrale.

La centrale selon l'invention est de conception simple et peut facilement être acheminée et montée sur un site d'utilisation. De plus, vu les circuits sensiblement fermés pour l'eau pressurisée utilisée pour la turbine Pelton et pour l'eau pour la production de vapeur surchauffée, la consommation en eau due à des pertes peut être théoriquement nulle ou en tout cas extrêmement réduire. De plus, la turbine Pelton de la centrale selon l'invention peut utiliser une eau non déminéralisée contrairement à l'eau utilisée dans le cycle de Rankine avec une détente dans une turbine à vapeur.

La centrale suivant l'invention s'est également révélée être très peu bruyante, de sorte qu'elle ne génère que peu de désagréments pour les riverains.

## Revendications

1. Centrale électrique thermique ou solaire thermodynamique basée sur un cycle thermodynamique, avantageusement un cycle au moins sensiblement équivalent à un cycle de vapeur de Rankine pour générer un liquide sous pression, associant (a) au moins une turbine Pelton pour la transformation de l'énergie du liquide sous pression en une énergie mécanique, et au moins un générateur ou alternateur pour transformer l'énergie mécanique en une énergie électrique, ladite centrale comprenant:

   (a) une unité de pressurisation d'un liquide (UP) (Fig. 4),
   (b) une turbine Pelton (P) comportant un arbre de rotation,
   (c) une conduite (20) reliant l'unité de pressurisation à la turbine Pelton (P) pour amener du liquide pressurisé à la turbine Pelton, ladite conduite (20) étant munie d'au moins un injecteur, et
   (d) un générateur, avantageusement un alternateur, adapté pour être entraîné par l'arbre de rotation de la turbine (P), avantageusement avec interposition d'un système d'engrenage(s),

   dans laquelle l'unité de pressurisation (UP) d'un liquide comprend au moins :

   - un réservoir (R1, R2) apte à résister à des pressions intérieures de plus de $5\ 10^5$ Pa et destiné à contenir le liquide à pressuriser, ledit réservoir (R1, R2) étant associé au moins à un premier conduit de sortie (14, 14') avec une valve (V5, V7) pour du liquide pressurisé dans la conduite (20) et à un premier conduit d'entrée (10, 10') avec valve (V6, V8) pour amener du liquide dans le réservoir (R1, R2), et
   - un moyen de chauffage,

   **caractérisé en ce que** le moyen de chauffage est un corps de chauffe à combustion de matières fossiles, de biomasse de bois ou autre noté CF, ou un corps de chauffe du type solaire à concentration, du type solaire thermodynamique noté CS (fig. 4 et 10) pour produire de la vapeur surchauffée,
**en ce que** le réservoir (R1,R2) est en outre associé à un deuxième conduit d'entrée (16, 16') pour amener une vapeur surchauffée dans le réservoir (R1, R2), via une conduite d'amenée (23) reliant le système de production de vapeur surchauffée au deuxième conduit d'entrée (16, 16') du réservoir, et **en ce que** le réservoir ou des réservoirs (R1, R2) comporte(nt) un élément piston flotteur isolé (K, fig. 9), apte à flotter à la surface du liquide présent dans le réservoir considéré (R1, R2).

2. Centrale suivant la revendication 1, **caractérisée en ce que** l'élément isolant (K) recouvre plus de 90% avantageusement plus de 99 % de la surface du liquide dans le réservoir (R1,R2).

3. Centrale suivant l'une quelconque des revendications précédentes, **caractérisée en ce que** le ou les réservoirs ont une forme allongée et sont associés à un flotteur de forme allongée apte à flotter à la surface du liquide présente dans le réservoir, ledit flotteur étant adapté pour définir dans un réservoir considéré une partie supérieure adaptée pour recevoir sensiblement uniquement de la vapeur surchauffée, et éventuellement du liquide de condensation provenant de la vapeur surchauffée, et une partie inférieure adaptée pour recevoir sensiblement du liquide provenant de la turbine Pelton, la partie supérieure étant munie d'au moins une isolation.

4. Centrale suivant la revendication 3, **caractérisée en ce que** la partie supérieure et la partie inférieure d'un réservoir sont attachées l'une à l'autre avec interposition d'une couche isolante, en particulier d'une membrane isolante dont le bord libre tourné vers l'intérieur du réservoir est avantageusement adapté pour toucher la paroi extérieure du flotteur.

5. Centrale suivant l'une quelconque des revendications précédentes, **caractérisée en ce que** le ou les réservoirs (R1, R2) sont isolés thermiquement, avantageusement le long de sa ou leur surfaces intérieures pour assurer une détente polytropique ou sensiblement isentropique de la vapeur surchauffée.

6. Centrale suivant l'une quelconque des revendications précédentes, **caractérisée en ce que** le réservoir (R1, R2) est en outre associé à un deuxième conduit de sortie (12, 12') pour évacuer de la vapeur présente dans le réservoir (R1, R2), ledit deuxième conduit de sortie (12, 12') étant associé à une valve (V1, V4).

7. Centrale électrique suivant l'une quelconque des revendications précédentes, **caractérisée en ce qu'**elle comporte (a) au moins un jeu de 4 réservoirs avantageusement sensiblement identiques (R1, R2 et R'$_1$ et R'$_2$) adaptés pour recevoir de la vapeur sous pression de plus de $5 \cdot 10^5$ Pa provenant du cycle thermodynamique ou du corps de chauffe (CF) et adaptés pour contenir du liquide sous pression destiné à la turbine Pelton, et (b) un système de contrôle des réservoirs pour amener du liquide sous pression à la turbine Pelton pour que le générateur ou alternateur entraîné par ladite turbine Pelton génère une énergie électrique sensiblement stable sur au moins 1 heure.

8. Centrale suivant la revendication 6, **caractérisée en ce que** le deuxième conduit de sortie (12,12') pour évacuer de la vapeur est relié à une canalisation (22) amenant la vapeur dans un condenseur (C) pour convertir la vapeur détendue en un liquide, ledit condenseur (C) étant relié par une canalisation (24) comportant un moyen de pompage (P1) pour amener du liquide provenant de la condensation de la pression du condenseur à la pression maximum dans le système (CS, CF) pour produire de la vapeur surchauffée.

9. Centrale suivant l'une quelconque des revendications précédentes, **caractérisée en ce qu'**elle comporte au moins un premier réservoir (R1) et un deuxième réservoir (R2) montés en parallèle, chacun desdits premier et deuxième réservoirs (R1, R2) étant apte à résister à des pressions intérieures de plus de $5 \cdot 10^5$ Pa et destiné à contenir le liquide à pressuriser, chaque réservoir (R1, R2) étant associé au moins à un premier conduit de sortie (14, 14') avec une valve (V5, V7) pour du liquide pressurisé dans le réservoir, à un deuxième conduit de sortie (12, 12') pour évacuer de la vapeur présente dans le réservoir considéré, ledit deuxième conduit de sortie (12, 12') étant associé à une valve (V1, V4), à un premier conduit d'entrée (10, 10') avec valve (V6, V8) pour amener du liquide dans le réservoir considéré (R1, R2), et à un deuxième conduit d'entrée (16, 16') pour amener une vapeur surchauffée dans le réservoir considéré (R1, R2).

10. Centrale suivant l'une quelconque des revendications précédentes, caractérisée en qu'elle comprend au moins un collecteur (FR) adapté pour récupérer du liquide après son action sur la turbine Pelton (P), ledit collecteur de liquide (FR de R3) étant sensiblement surélevé par rapport à un ou plusieurs réservoirs (R1, R2) de manière à permettre un remplissage du ou de réservoirs considérés (R1, R2) par la force de gravité via une canalisation (21) s'étendant entre ledit collecteur (FR) et ledit premier conduit d'entrée (10,10') du ou des réservoirs considérés, de sorte qu'un premier circuit fermé pour le liquide est formé entre la turbine Pelton (P) et le ou des réservoirs (R1, R2).

**11.** Centrale suivant la revendication 8, **caractérisée en ce que** le système pour produire de la vapeur surchauffée (CS, CF) et le ou les réservoirs (R1, R2) forment un deuxième circuit fermé avec le condenseur (C) et le système de pompage (P1).

**12.** Centrale électrique suivant l'une quelconque des revendications précédentes, **caractérisée en ce qu'**elle comporte une série de réservoirs jumelés (R1, R2) adaptés pour alimenter une série de turbines Pelton (P), dont chacune d'elles est adaptée au rendement proche de l'optimum, dont les arbres entraînent avantageusement via un train d'engrenages un même générateur, avantageusement un même alternateur.

**13.** Centrale électrique suivant l'une quelconque des revendications précédentes, **caractérisée en ce que** le liquide est un milieu aqueux, avantageusement contenant plus de 90% en poids d'eau, tandis que la vapeur surchauffée est une vapeur constituée à plus de 90% en volume de vapeur d'eau surchauffée sous pression.

**14.** Centrale électrique suivant la revendication 1, **caractérisée en ce qu'**elle comporte un condenseur (C) de vapeur sortant d'un ou de réservoirs (R1, R2), ledit condenseur (C) comprenant un élément d'échange thermique dans lequel circule un fluide pour assurer la condensation de la vapeur en un liquide, et **en ce que** l'élément d'échange thermique du condenseur (C) est relié à un échangeur permettant d'utiliser la chaleur de condensation en vue d'une utilisation en cogénération.

**15.** Centrale électrique suivant l'une quelconque des revendications précédentes, **caractérisée en ce qu'**elle est adaptée pour fonctionner avec des pressions de vapeur surchauffée de plus de $10 \cdot 10^5$ Pa, avantageusement de plus de $25 \cdot 10^5$ Pa, de préférence de plus de $50 \cdot 10^5$ Pa ou plus, pour des températures de vapeur comprises entre 110°C et 600°C, en particulier supérieures à 150°C .

**16.** Procédé de production d'énergie électrique utilisant une centrale suivant l'une quelconque des revendications 1 à 15, dans lequel

- on produit une vapeur surchauffée, avantageusement une vapeur d'eau surchauffée,
- on amène cette vapeur surchauffée dans un réservoir contenant un liquide pour le mettre sous pression, et
- on conduit le liquide sous pression à au moins une turbine Pelton pour entraîner au moins un générateur ou alternateur pour produire de l'énergie électrique.

**17.** Procédé selon la revendication 16, dans lequel on utilise au moins un jeu de réservoirs sensiblement identiques (R1,R2 et R'1 et R'2) pour la mise sous pression d'un liquide au moyen de vapeur surchauffée, et dans lequel on combine le cycle de remplissage et de vidange d'une paire de réservoirs R1,R2 et celui d'une autre paire de réservoirs R'1 et R'2 en quinconce, de manière à contrôler la fourniture de vapeur, sous pression en provenance de la chaudière en continu sans désemparer.


**Patentansprüche**

**1.** Elektrothermie- oder Solarthermie-Kraftwerk, das auf einem thermodynamischen Zyklus, vorzugsweise einem Zyklus, der wenigstens im Wesentlichen zu einem Rankine-Dampfzyklus äquivalent ist, beruht, um eine mit Druck beaufschlagte Flüssigkeit zu erzeugen, das (a) wenigstens eine Pelton-Turbine enthält, um die Energie der mit Druck beaufschlagten Flüssigkeit in mechanische Energie umzuwandeln, und wenigstens einen Generator oder Wechselstromgenerator enthält, um die mechanische Energie in elektrische Energie zu transformieren, wobei das Kraftwerk Folgendes umfasst:

(a) eine Einheit (UP) zum Beaufschlagen einer Flüssigkeit mit Druck (Fig. 4),
(b) eine Pelton-Turbine (P), die eine Drehwelle besitzt,
(c) eine Leitung (20), die die Druckbeaufschlagungseinheit mit der Pelton-Turbine (P) verbindet, um die mit Druck beaufschlagte Flüssigkeit der Pelton-Turbine zuzuführen, wobei die Leitung (20) mit wenigstens einer Einspritzeinrichtung versehen ist, und
(d) einen Generator, vorzugsweise einen Wechselstromgenerator, der dafür ausgelegt ist, von der Drehwelle der Turbine (P), vorzugsweise über ein Getriebesystem, angetrieben zu werden,

wobei die Einheit (UP) zum Beaufschlagen einer Flüssigkeit mit Druck wenigstens Folgendes umfasst:

- einen Vorratsbehälter (R1, R2), der Innendrücken von mehr als $5 \cdot 10^5$ Pa widerstehen kann und dazu bestimmt ist, die mit Druck zu beaufschlagende Flüssigkeit zu enthalten, wobei dem Vorratsbehälter (R1, R2) wenigstens eine erste Ausgangsleitung (14, 14') mit einem Ventil (V5, V7) für die mit Druck beaufschlagte Flüssigkeit in der Leitung (20) und wenigstens eine erste Eingangsleitung (10, 10') mit Ventil (V6, V8), um dem Vorratsbehälter (R1, R2) Flüssigkeit zuzuführen, zugeordnet sind, und

- ein Heizmittel,

**dadurch gekennzeichnet, dass** das Heizmittel ein Heizkörper zur Verbrennung fossiler Stoffe, Holzbiomasse oder dergleichen, bezeichnet mit CF, oder ein Heizkörper des Solarkonzentrationstyps oder des Solarthermietyps, mit CS bezeichnet, (Fig. 4 und 10) ist, um den übererhitzten Dampf zu erzeugen, dass dem Vorratsbehälter (R1, R2) außerdem eine zweite Eingangsleitung (16, 16') zugeordnet ist, um dem Vorratsbehälter (R1, R2) über eine Zufuhrleitung (23), die das System für die Erzeugung von übererhitztem Dampf mit der zweiten Eingangsleitung (16, 16') des Vorratsbehälters verbindet, übererhitzten Dampf zuzuführen, und dass der eine oder die mehreren Vorratsbehälter (R1, R2) ein isoliertes Schwimmerkolbenelement (K, Fig. 9) umfassen, das auf der Oberfläche der Flüssigkeit, die in dem betrachteten Vorratsbehälter (R1, R2) vorhanden ist, schwimmen kann.

2. Kraftwerk nach Anspruch 1, **dadurch gekennzeichnet, dass** das isolierende Element (K) mehr als 90 %, vorzugsweise mehr als 99 % der Oberfläche der Flüssigkeit in dem Vorratsbehälter (R1, R2) abdeckt.

3. Kraftwerk nach einem der vorhergehenden Ansprüche, **dadurch gekennzeichnet, dass** der eine oder die mehreren Vorratsbehälter eine langgestreckte Form haben und dass ihnen ein Schwimmer mit langgestreckter Form zugeordnet ist, der auf der Oberfläche der in dem Vorratsbehälter vorhandenen Flüssigkeit schwimmen kann, wobei der Schwimmer dafür ausgelegt ist, in einem betrachteten Vorratsbehälter einen oberen Teil zu definieren, der dafür ausgelegt ist, im Wesentlichen ausschließlich den übererhitzten Dampf und eventuell Kondensationsflüssigkeit, die von dem übererhitzten Dampf stammt, aufzunehmen, und einen unteren Teil zu definieren, der dafür ausgelegt ist, im Wesentlichen die Flüssigkeit aufzunehmen, die von der Pelton-Turbine stammt, wobei der obere Teil mit wenigstens einer Isolation versehen ist.

4. Kraftwerk nach Anspruch 3, **dadurch gekennzeichnet, dass** der obere Teil und der untere Teil eines Vorratsbehälters unter Einfügung einer Isolierschicht, insbesondere einer isolierenden Membran, deren freier Rand, der in den Innenraum des Vorratsbehälters weist, vorzugsweise dafür ausgelegt ist, die äußere Wand des Schwimmers zu berühren, aneinander befestigt sind.

5. Kraftwerk nach einem der vorhergehenden Ansprüche, **dadurch gekennzeichnet, dass** der eine oder die mehreren Vorratsbehälter (R1, R2) thermisch isoliert sind, vorzugsweise längs ihrer inneren Oberflächen, um eine polytropische oder im Wesentlichen isotropische Entspannung des überhitzten Dampfs sicherzustellen.

6. Kraftwerk nach einem der vorhergehenden Ansprüche, **dadurch gekennzeichnet, dass** dem Vorratsbehälter (R1, R2) außerdem eine zweite Ausgangsleitung (12, 12') zugeordnet ist, um den Dampf, der in dem Vorratsbehälter (R1, R2) vorhanden ist, abzuführen, wobei der zweiten Ausgangsleitung (12, 12') ein Ventil (V1, V4) zugeordnet ist.

7. Elektrizitätskraftwerk nach einem der vorhergehenden Ansprüche, **dadurch gekennzeichnet, dass** es (a) wenigstens einen Satz von 4 Vorratsbehältern, die vorzugsweise im Wesentlichen gleich sind (R1, R2 und R'$_1$ und R'$_2$) sind und dafür ausgelegt ist, den Dampf, der mit einem Druck von mehr als 5 · $10^5$ Pa beaufschlagt ist und der von dem thermodynamischen Zyklus oder von dem Heizkörper (CF) stammt, zu empfangen, und dafür ausgelegt sind, die mit Druck beaufschlagte Flüssigkeit zu enthalten, die für die Pelton-Turbine bestimmt ist, und (b) ein System zum Steuern der Vorratsbehälter, um die mit Druck beaufschlagte Flüssigkeit der Pelton-Turbine zuzuführen, damit der Generator oder Wechselstromgenerator, der durch die Pelton-Turbine angetrieben wird, elektrische Energie, die über wenigstens 1 Stunde im Wesentlichen stabil ist, erzeugt, umfasst.

8. Kraftwerk nach Anspruch 6, **dadurch gekennzeichnet, dass** die zweite Ausgangsleitung (12, 12') zum Abführen des Dampfs mit einem Kanal (22) verbunden ist, der den Dampf einem Kondensator (C) zuführt, um den entspannten Dampf in Flüssigkeit umzuwandeln, wobei der Kondensator (C) durch einen Kanal (24) verbunden ist, der ein Pumpmittel (P1) enthält, um Flüssigkeit, die der Kondensation stammt, von dem Druck des Kondensators auf den maximalem Druck in dem System (CS, CF) zu bringen, um den übererhitzten Dampf zu erzeugen.

9. Kraftwerk nach einem der vorhergehenden Ansprüche, **dadurch gekennzeichnet, dass** es wenigstens einen ersten Vorratsbehälter (R1) und einen zweiten Vorratsbehälter (R2), die parallel geschaltet sind, umfasst, wobei sowohl der erste als auch der zweite Vorratsbehälter (R1, R2) dafür ausgelegt sind, Innendrücken von mehr als 5 · $10^5$ Pa zu widerstehen, und dafür bestimmt sind, die mit Druck zu beaufschlagende Flüssigkeit zu enthalten, wobei jedem Vorratsbehälter (R1, R2) wenigstens eine erste Ausgangsleitung (14, 14') mit einem Ventil (V5, V7) für die mit Druck beaufschlagte Flüssigkeit in dem Vorratsbehälter und eine zweite Ausgangsleitung (12, 12'), um den Dampf, der in dem betrachteten Vorratsbehälter vorhanden ist, abzuführen, zugeordnet sind, wobei der zweiten Ausgangsleitung (12, 12') ein Ventil (V1, V4), eine erste Eingangsleitung (10, 10') mit Ventil (V6, V8), um dem betrachteten Vorratsbehälter (R1, R2) Flüssigkeit zuzuführen, und eine zweite Eingangsleitung (16, 16'), um dem betrachteten Vorratsbehälter (R1, R2) übererhitzten Dampf zuzuführen, zugeordnet sind.

10. Kraftwerk nach einem der vorhergehenden Ansprüche, **dadurch gekennzeichnet, dass** es wenigstens einen Sammler (FR) umfasst, der dafür ausgelegt ist, Flüssigkeit nach ihrer Wirkung in der Pelton-Turbine (P) wiederzugewinnen, wobei der Flüssigkeitssammler (FR von R3) in Bezug auf einen oder mehrere Vorratsbehälter (R1, R2) im Wesentlichen erhöht ist, um eine Befüllung des einen oder der mehreren betrachteten Vorratsbehälter (R1, R2) durch die Schwerkraft durch einen Kanal (21), der sich zwischen dem Sammler (FR) und der ersten Eingangsleitung (10, 10') des einen oder der mehreren betrachteten Vorratsbehälter erstreckt, zu ermöglichen, derart, dass ein erster geschlossener Kreis für die Flüssigkeit zwischen der Pelton-Turbine (P) und dem einen oder den mehreren Vorratsbehältern (R1 oder R2) gebildet ist.

11. Kraftwerk nach Anspruch 8, **dadurch gekennzeichnet, dass** das System (CS, CF) für die Erzeugung des übererhitzten Dampfs und der eine oder die mehreren Vorratsbehälter (R1, R2) einen zweiten geschlossenen Kreis mit dem Kondensator (C) und dem Pumpsystem (P1) bilden.

12. Elektrothermie-Kraftwerk nach einem der vorhergehenden Ansprüche, **dadurch gekennzeichnet, dass** es eine Reihe von gepaarten Vorratsbehältern (R1, R2) umfasst, die dafür ausgelegt sind, eine Reihe von Pelton-Turbinen (P) zu versorgen, wovon jede für eine Leistung in der optimalen Umgebung ausgelegt ist und deren Wellen vorzugsweise über einen Getriebezug denselben Generator, vorzugsweise denselben Wechselstromgenerator, antreiben.

13. Elektrothermie-Kraftwerk nach einem der vorhergehenden Ansprüche, **dadurch gekennzeichnet, dass** die Flüssigkeit ein wässriges Medium ist, das vorzugsweise mehr als 90 Gew.-% Wasser enthält, während der übererhitzte Dampf ein Dampf ist, der aus mehr als 90 Vol.-% übererhitztem Wasserdampf unter Druck gebildet ist.

14. Elektrothermie-Kraftwerk nach Anspruch 1, **dadurch gekennzeichnet, dass** es einen Kondensator (C) für Dampf, der aus einem oder mehreren Vorratsbehältern (R1, R2) austritt, umfasst, wobei der Kondensator (C) ein Wärmetauscherelement umfasst, in dem ein Fluid zirkuliert, um die Kondensation des Dampfes in eine Flüssigkeit sicherzustellen, und dass das Wärmetauscherelement des Kondensators (C) mit einem Tauscher verbunden ist, der ermöglicht, die Kondensationswärme für eine Doppelgenerationsanwendung zu verwenden.

15. Elektrothermie-Kraftwerk nach einem der vorhergehenden Ansprüche, **dadurch gekennzeichnet, dass** es dafür ausgelegt ist, mit Drücken von übererhitztem Dampf von mehr als $10 \cdot 10^5$ Pa, vorzugsweise mehr als $25 \cdot 10^5$ Pa, bevorzugt mehr als $50 \cdot 10^5$ Pa oder mehr bei Dampftemperaturen im Bereich von 110 °C bis 600 °C, insbesondere mehr als 150 °C, zu arbeiten.

16. Verfahren zum Erzeugen elektrischer Energie unter Verwendung eines Kraftwerks nach einem der Ansprüche 1 bis 15, wobei:

- übererhitzter Dampf, vorzugsweise übererhitzter Wasserdampf, erzeugt wird;
- dieser übererhitzte Dampf einem Vorratsbehälter zugeführt wird, der eine Flüssigkeit enthält, um sie mit Druck zu beaufschlagen, und
- die mit Druck beaufschlagte Flüssigkeit zu wenigstens einer Pelton-Turbine geleitet wird, um wenigstens einen Generator oder Wechselstromgenerator anzutreiben, um elektrische Energie zu erzeugen.

17. Verfahren nach Anspruch 16, wobei wenigstens ein Satz im Wesentlichen gleicher Vorratsbehälter (R1, R2 und R'1 und R'2) verwendet wird, um eine Flüssigkeit mittels übererhitzten Dampfs mit Druck zu beaufschlagen, und wobei der Befüllungs- und Entleerungszyklus eines Paars Vorratsbehälter (R1, R2) und jener eines anderen Paars Vorratsbehälter (R'1, R'2) versetzt kombiniert werden, derart, dass die Lieferung von Dampf unter Druck, der von dem Wasserkessel stammt, ununterbrochen ohne Abweichung gesteuert wird.

**Claims**

1. Thermal or solar thermodynamic electric power plant based on a thermodynamic cycle, advantageously a cycle at least more or less equivalent to a Rankine steam cycle, for generating a liquid under pressure, combining (a) at least one Pelton turbine for converting the energy of the liquid under pressure into mechanical energy and at least one generator or alternator for converting the mechanical energy into electric power, this power plant comprising:

(a) a liquid pressurisation unit (UP) (Figure 4),
(b) a Pelton turbine (P) comprising a rotating shaft,
(c) a pipe (20) connecting the pressurisation unit to the Pelton turbine (P) for taking the pressurised liquid to the Pelton turbine, this pipe (20) being equipped with at least one injector, and (d) a generator, advantageously an alternator, suitable for being driven by the rotating shaft of the turbine (P), advantageously with a gear system interposed,

in which the liquid pressurisation unit (UP) comprises at least:

- a tank (R1, R2) able to resist internal pressures of more than $5 \cdot 10^5$ Pa and intended to contain the liquid to be pressurised, this tank (R1, R2) being combined with at least a first outlet pipe (14, 14') with a valve (V5, V7) for the pressurised liquid in the pipe (20) and a first inlet pipe (10, 10') with a valve (V6, V8) for taking the liquid into the tank (R1, R2), and
- a means of heating,

**characterised in that** the means of heating is a heater burning fossil materials, wood or other biomass marked CF or a heater of the solar concentration type or thermodynamic solar type marked CS (figures 4 and 10) for producing superheated steam, **in that** the tank (R1, R2) is also combined with a second inlet pipe (16, 16') for taking superheated steam into the tank (R1, R2) via an intake pipe (23) connecting the superheated steam production system with the second inlet pipe (16, 16') of the tank and **in that** the tank or tanks (R1, R2) comprise(s) an insulated floating piston element (K, figure 9) able to float on the surface of the liquid present in the tank under consideration (R1, R2).

2. Power plant according to claim 1, **characterised in that** the insulating element (K) covers more than 90%, advantageously more than 99%, of the surface of the liquid in the tank (R1, R2).

3. Power plant according to any one of the previous claims, **characterised in that** the tank or tanks has/have an elongated shape and is/are combined with a float with an elongated shape able to float on the surface of the liquid present in the tank, this float being suitable for defining in a tank under consideration a top part suitable for receiving more or less only the superheated steam, and possibly the condensation liquid coming from the superheated steam, and a bottom part suitable for receiving more or less the liquid coming from the Pelton turbine, the top part being equipped with at least one insulation element.

4. Power plant according to claim 3, **characterised in that** the top part and the bottom part of a tank are attached to each other with an insulating layer, particularly an insulating membrane, interposed, the free edge turned towards the inside of the tank of which advantageously is suitable for touching the external wall of the float.

5. Power plant according to any one of the previous claims, **characterised in that** the tank or tanks (R1, R2) is/are thermally insulated, advantageously along its or their internal surfaces, for providing polytropic or more or less isentropic expansion of the superheated steam.

6. Power plant according to any one of the previous claims, **characterised in that** the tank (R1, R2) is also combined with a second outlet pipe (12, 12') for removing the steam present in the tank (R1, R2), this second outlet pipe (12, 12') being combined with a valve (V1, V4).

7. Electric power plant according to any one of the previous claims, **characterised in that** it comprises (a) at least one set of 4 tanks, advantageously more or less identical (R1, R2 and R'$_1$ and R'$_2$), suitable for receiving the steam under pressure at more than $5 \cdot 10^5$ Pa coming from the thermodynamic cycle or heater (CF) and suitable for containing the liquid under pressure intended for the Pelton turbine, and (b) a tank control system for taking the liquid under pressure to the Pelton turbine so that the generator or alternator driven by this Pelton turbine generates more or less stable electric power for at least 1 hour.

8. Power plant according to claim 6, **characterised in that** the second outlet pipe (12, 12') for removing the steam is connected to a pipeline (22) taking the steam into a condenser (C) for converting the steam released into a liquid, this condenser (C) being connected by a pipeline (24) comprising a means of pumping (P1) for taking the liquid coming from condensation of the pressure of the condenser to the maximum pressure in the system (CS, CF) for producing superheated steam.

9. Power plant according to any one of the previous claims, **characterised in that** it comprises at least a first tank (R1 and a second tank (R2) mounted in parallel, each of these first and second tanks (R1, R2) being able to resist internal pressures of more than $5 \cdot 10^5$ Pa and intended to contain the liquid to be pressurised, each tank (R1, R2) being combined with at least a first outlet pipe (14, 14') with a valve (V5, V7) for the pressurised liquid in the tank, a second outlet pipe (12, 12') for removing the steam present in the tank under consideration, this second outlet pipe (12, 12') being combined with a valve (V1, V4), a first inlet pipe (10, 10') with a valve (V6, V8) for taking the liquid into the tank under consideration (R1, R2) and a second inlet pipe (16, 16') for taking superheated steam into the tank under consideration (R1, R2).

10. Power plant according to any one of the previous claims, **characterised in that** it comprises at least one collector (FR) suitable for recovering the liquid after its action on the Pelton turbine (P), this liquid collector (FR of R3) being more or less raised in relation to one or several tanks (R1, R2) so as to allow the tank or tanks under consideration (R1, R2) to be filled by the force of gravity via a pipeline (21) extending between this collector (FR) and this first inlet pipe (10, 10') of the tank or tanks under consideration, so that a first closed circuit for the liquid is formed between the Pelton turbine (P) and the tank or tanks (R1, R2).

11. Power plant according to claim 8, **characterised in that** the system for producing superheated steam (CS, CF) and the tank or tanks (R1, R2) form a second closed circuit with the condenser (C) and the pumping system (P1).

12. Electric power plant according to any one of the previous claims, **characterised in that** it comprises a series of twin tanks (R1, R2) suitable for supplying a series of Pelton turbines (P), each of which is suitable for close to optimum output, the shafts of which advantageously drive one and the same generator, advantageously one and the same alternator, via a gear train.

13. Electric power plant according to any one of the previous claims, **characterised in that** the liquid is an aqueous medium, advantageously containing more than 90% by weight of water, whereas the superheated steam is steam that is made up of more than 90% by volume of superheated water vapour under pressure.

14. Electric power plant according to claim 1, **characterised in that** it comprises a condenser (C) for steam coming from a tank or tanks (R1, R2), this condenser (C) comprising a heat exchange element, in which a fluid circulates, for providing condensation of the steam into a liquid and **in that** the heat exchange element of the condenser (C) is connected to an exchanger allowing the condensation heat to be used with a view to utilisation in cogeneration.

15. Electric power plant according to any one of the previous claims, **characterised in that** it is suitable for operating with superheated steam pressures of more than 10 $10^5$ Pa, advantageously more than 25 $10^5$ Pa, preferably more than 50 $10^5$ Pa or more, for steam temperatures of between 110°C and 600°C, particularly more than 150°C.

16. Method for producing electric power using a power plant according to any one of claims 1 to 15, in which

    - superheated steam, advantageously superheated water vapour, is produced,
    - this superheated steam is taken into a tank containing a liquid for putting it under pressure and
    - the liquid under pressure is taken to at least one Pelton turbine for driving at least one generator or alternator for producing electric power.

17. Method according to claim 16, in which at least one set of roughly identical tanks (R1, R2 and R'1 and R'2) is used for putting a liquid under pressure by means of superheated steam and in which the filling and emptying cycle of a pair of tanks R1, R2 is combined with that of another pair of tanks R'1 and R'2 in a staggered arrangement so as to control the supply of steam under pressure coming from the boiler continuously without stopping.

Fig. 1

Fig. 2

Fig. 3

EP 2 935 807 B1

Fig. 4

**Légende**

| | |
|---|---|
| | Vapeur surchauffée et sous pression Pa Par ex: 600°C et 70 bar |
| | Vapeur détendue sous Pb |
| | Vapeur sous pression atmosphérique |
| | Eau |

17

Fig. 5

Fig. 6

Fig. 7

- Début de la détente dans R2
- Mise à pression atmosphérique de R1 et condenseur.
- Alimentation de la Pelton HP

○ R1
● R2

Fig. 8

- Alimentation de la Pelton MP
- Remplissage du cylindre R1 via le circulateur P1

○ R1
● R2

Légende

Vapeur surchauffée et sous pression Pa
Par ex: 600°C et 70 bar

Vapeur détendue sous Pb

Vapeur sous pression atmosphérique

Eau

R1 ou
R2 Acier

Isolant K

Isolant

Enveloppe
Acier

Liquide

L

Piston flotteur
isolé

Fig. 9

Fig. 10

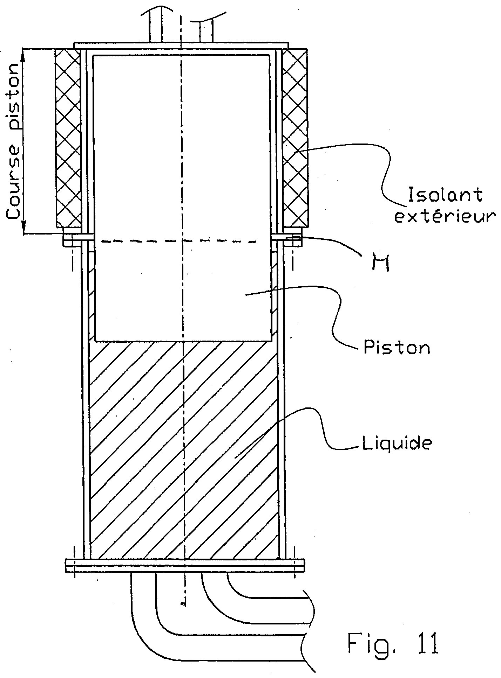

Fig. 11

**EP 2 935 807 B1**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 4710100 A
- AT 506796
- US 4063417 A
- EP 0040748 A
- WO 9716629 A